# EUROPEAN PATENT APPLICATION

(11) **EP 2 610 695 A1**
(43) Date of publication of application: **03.07.2013**
(21) Application number: 11196060.5
(22) Date of filing: 29.12.2011
(51) Int. Cl.: G05B 19/418

(54) **Method and web application for OEE - analysis**

(71) Applicant: Siemens Aktiengesellschaft, 80333 München (DE)
(72) Inventor: Piccazzo, Michele, 16127 Genova (IT)
(74) Representative: Kley, Hansjörg

(57) **Abstract**

A solution is disclosed for an Overall Equipment Effectiveness (OEE) analysis for a manufacturing execution system (MES) allowing a comparative analysis that makes it possible to build links and relations among the values found in a report with raw data acquired from field. This solution is a web application running on a web server (3) and on OEE DataBrowsers (41, 42, 43) running on clients (4). In order to come to a comparative analysis an OEE-server (2) is provided with the functionality
- acquisition of data (21) from the MES of the production plant (5);
- scheduling for reports (22);
- run time query execution (23).

Additionally the web server (3) gets data from a data mining support database (12).

## Description

The present invention relates to a method and a web application for OEE - analysis according to the independent claims.

In the context of this invention reference is made to Manufacturing Execution Systems which comply with the ISA S95 standard as referenced herewith [2], [3] and [4].

Overall equipment effectiveness OEE is a hierarchy of metrics which evaluates and indicates how effectively a manufacturing operation is utilized. The results are stated in a generic form which allows comparison between manufacturing units in differing industries. It is not however an absolute measure and is best used to identify scope for process performance improvement, and how to get the improvement. If for example the cycle time is reduced, the OEE can also reduce, even though more products are produced for less resource. Another example is if one enterprise serves a high volume, low variety market, and another enterprise serves a low volume, high variety market. More changeovers (set-ups) will lower the OEE in comparison, but if the product is sold at a premium, there could be more margins with a lower OEE.

SIMATIC IT OEE/DTM - a product of Siemens AG - provides dedicated functionality and a GUI for equipment efficiency analysis and root-cause analyses, such as data acquisition and aggregation into OEE KPIs, as e.g. availability, performance, quality, OEE and many others, including custom KPIs.

In EP 2 339 418 A1 [1] a method for improving the efficiency of a production are disclosed via a model and a simulation. The method is based on the steps:
- modeling a production facility into a virtual production facility;
- simulating at least one working of the production facility from a virtual working of the virtual production facility;

- collecting at least one data related to said virtual working;
- computing at least one overall equipment effectiveness key performance indicator from said data.

Up to now, using the SIMATIC Overall Equipment Effectiveness Product Option the analysis of data coming from field has been delegated to different tools that can be grouped as follows:

Reporting tools:
They allow the analysis on large time span. Reports highlight the main production indexes on pre-processed data and they are useful especially for the analysis of the production «already done». Reports are based on scheduled calculation periodically updated in a background process. As they are calculated, they can be viewed in charts and tables.

Runtime tools:
They give the possibility of querying the database and they let the user insert the parameters of the query e.g. the time range and the selection of the equipment.

Border line tools:
Operators on the line of production have a set of standalone and web applications that display in charts all the main data coming from field. Using these tools, operators can modify and fix some input data such as the identifier of the order of the production and they can detail the cause of a stop. These tools give information e.g. about the count of pieces produced during the actual shift and the state of the pieces of the equipment of the line.

The main differences between report and border-line tool is that the first one is useful for long term analysis while the second one is related to the «on-going» production. The runtime tools can be used in order to close this gap. Although the input data are always the same, the details of analysis allowed are different.

In the case of reports, the analysis is a «top-down» analysis: it means that the user refines the time range of the calculation (e.g.) from one year to one month and then to one hour (depending on the configuration). The limit of this kind of analysis is that it depends on the configuration of the scheduled calculation.

In the case of runtime tools, it is possible to extract data setting the parameters of the query. This kind of analysis is not integrated with reports and border line tools.

In the last case, the border line tools allow the «bottom-up» analysis from raw to aggregated data: the main constraint is the time range used during the production (e.g. the current worked shift).

There is no tool allowing a comparative analysis that makes it possible to build links and relations among the values found in a report with raw data acquired from field. Due to the comparative analysis, it could be possible to extract a list of causes that can affect the production and a list of rules (let's say «patterns») that can help the management to improve the production. Using this tool, it could be possible to answer the following questions:

i) When the production is lower than expected, what is the bottleneck machine of the line? And what is the main cause of failures?

ii) How many times during the week was the production over the target?

Up to now, it is not possible to have a comparative analysis moving from one tool to another.

It is therefore an objective of the present invention to provide a solution for an Overall Equipment Effectiveness analysis for a manufacturing execution system allowing a comparative analysis that makes it possible to build links and relations among the values found in a report with raw data acquired from field. Due to the comparative analysis said solution allowing in particular forecasting an effect of a correction of a production facility parameter on the production facility efficiency within the manufacturing execution system.

This objective is reached by a method and a web application with the features given in the independent claims.

### Summary of the invention

The invention according to the independent claim has the following advantages:

1. Only on client side all the main features of reporting, runtime and border line tools have to be integrated: users can complete their analysis without switching from one tool to another.

2. The distributed architecture shares the computational load among database server, OEE Server and Web Server. Clients must only render the results and let the user select them.

3. The Data Mining Service moves from the archived data for reporting tools to runtime execution of queries depending on the client requests. This service is based on Data Mining Algorithms written on top of OEE database: starting from the configuration of a report or a runtime query, they are able to add a list of useful constraints for building a new query.

4. A comparative analysis is possible: up to day, reports are static and user can compare results moving from one report to another.

5. Pre-calculated results are used which allow reducing the data on the network between all the computers involved. When the system switches to runtime queries, the set of data has been restricted.

The working principle of the invention will now be described more in detail with reference to the accompanying drawings wherein:

Figure 1 Architecture of a OEE DataBrowser application;

Figure 2 bar chart depicting the result of the filters in the last 6 months;

Figure 3 grouping the result of figure 2 by equipment;

Figure 4 filtering of the results for a specific period for a cause;

Figure 5 grouping the results of figure 4 by showing particular causes.

In order to have a concise wording, some definitions are given in the following paragraphs.

A «web application» is an application that is accessed over a network such as the Internet or an intranet. The term may also mean a computer software application that is coded in a browser-supported language (such as JavaScript, combined with a browser-rendered markup language like HTML) and reliant on a common web browser to render the application executable. Sometimes the terms OEE DataBrowser application and OEE DataBrowser are not distinguished consequently, but from the context there is no ambiguity for that reaseon.

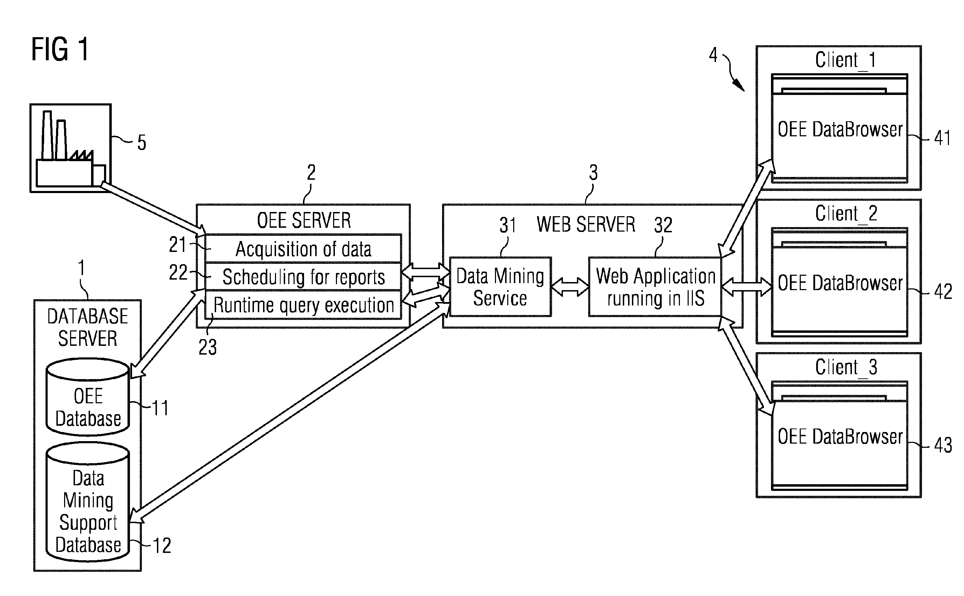

FIG 1 depicts both the software and the hardware architectures of a web application. This web application is in context with this invention called an «OEE DataBrowser application» on the server side of the OEE DataBrowser. The term «OEE DataBrowser» is used for a browser 41, 42, 43 on the client side 4.

Referring to FIG 1 the database server 1 is a machine dedicated to the storage of data and to ensure that the OEE database 11 is running always. The database server 1 hosts
- the OEE database 11 and a
- Data Mining Support database 12.
The Data Mining Support database 12 contains data for the OEE analysis and is used only by the OEE DataBrowsers, wherein an OEE Databrowser has the meaning of browsers 41, 42, 43 running on a client 4.

On a workstation, called an «OEE Server» 2 three services are ensured:
- the acquisition of data 21 from field,
- the scheduling of calculations 22 for reports and the
- execution 23 of runtime queries for runtime tools. Scheduling of calculations 22 comprises: Due to the fact that reports displays complex results coming from different calculations on huge number of records (it may reach millions of records), for performance reasons, it is important to run the calculation one time - one time in the sense of once - for all reports and store its results in the OEE database 11. Then, following a scheduling strategy, these results are updated, e.g. once within one hour.

The web server 3 executes the web application of OEE DataBrowser and hosts the «data mining service» 31. The latter comprises in general the process of discovering new patterns from large data sets. The goal of data mining is to extract knowledge from a data set in a human-understandable structure. In context with the invention this data mining service has the tasks:
- getting data from scheduled calculations;
- getting data from runtime queries;
- proposing a set of pre-built queries based on the configuration of the scheduled calculations and on the user selection coming from client 4 applications such as the OEE DataBrowser 41, 42, 43;
- proposing new queries based on results of scheduled calculations, runtime queries, user selection and metadata tags of previous analysis;
- storing the new queries and results as patterns using metadata so that they can be repeated, modify and reapply to a new set of data. These metadata linked to data coming from reports and runtime queries are stored in the Data Mining Support Database;
- executing data mining algorithms in order to find the results as soon as possible.

On all clients 4 is the OEE DataBrowser 41, 42, 43 running with a the graphic user interface allowing to access the data mining service 31 running on the web server 3.

The web server 3 side of the OEE DataBrowser application is implemented as a Microsoft ASP.NET solution containing both web services and ASP.NET pages. ASP.NET is a Web application framework developed and marketed by Microsoft to allow programmers to build dynamic Web sites, web applications and web services. ASP.NET is built on the Common Language Runtime CLR, allowing programmers to write ASP.NET code using any supported NET language. The web services give an entry point for the requests of data coming from the OEE DataBrowsers 41, 42, 43 on the Clients 4 that can be implemented as a Rich Internet Application in Silverlight 4 or in any other languages supporting Web Services preferably as WPF. The Windows Presentation Foundation WPF is a computer-software graphical subsystem (developed by Microsoft) for rendering user interfaces in Windows-based applications.

The OEE DataBrowser 41, 42, 43 mirrors the server side functionality using interactive charts/reports and with the following features:
1. it allows to filter the preconfigured set of queries for reports using the following data:
   - the selected equipment of pieces of equipment;
   - the time range;
   - the name of calculation executed in the report;
   - conditional statements built with wizards (e.g. the minimum OEE during the production of a specific product);
2. it allows to switch from reports to runtime calculations and vice versa without the user noticing;
3. it allows to integrate results of report with runtime calculations;
4. it allows to show the results of the defined filters in charts and tables;
5. it allows storing the results and the filters defined in the Data Mining Support Database 12 so that they can be reopened for new analysis later.

The OEE DataBrowser application requires a dedicated analysis of OEE in order to write Data Mining Algorithms. They are a set of rules based on the mathematical model of OEE and they highlight a decision tree that guides the users during the analysis.

The OEE DataBrowser 41, 42, 43 on the client side 4 is the main Graphic User Interface GUI of the Data Mining Service 31 and Data Mining Support Database 12. The main functionality of the Data Mining Service 31 is to allow the execution of Data Mining Algorithms on runtime data through a cyclic process. The steps defined above for the OEE DataBrowser application can be repeated in order to, to update and/or increase the Data Mining Support Database.

Up to now, in SIMATIC IT, the integration among reports, border line and runtime tools are left to the end users that can switch among the tools depending on their analysis. The integrated solution proposed in the present invention disclosure increases the functionalities of the product: first of all, it allows moving from macro-analysis to micro-analysis pointing out details required by the end users. Moreover, storing the analysis in the Data Mining Support data base 12, it is possible to repeat and reapply the analysis to new set of data. In this way, it is possible to increase the database of the Data Mining with new results coming from Data Mining Algorithms on data acquired from field.

As an example, let's investigate the main cause of stops in the last 6 months on a line of production. When the stop is greater than 20 minutes, what is the main cause? Is it possible due to a miss of raw materials or to a failure on specific equipment?

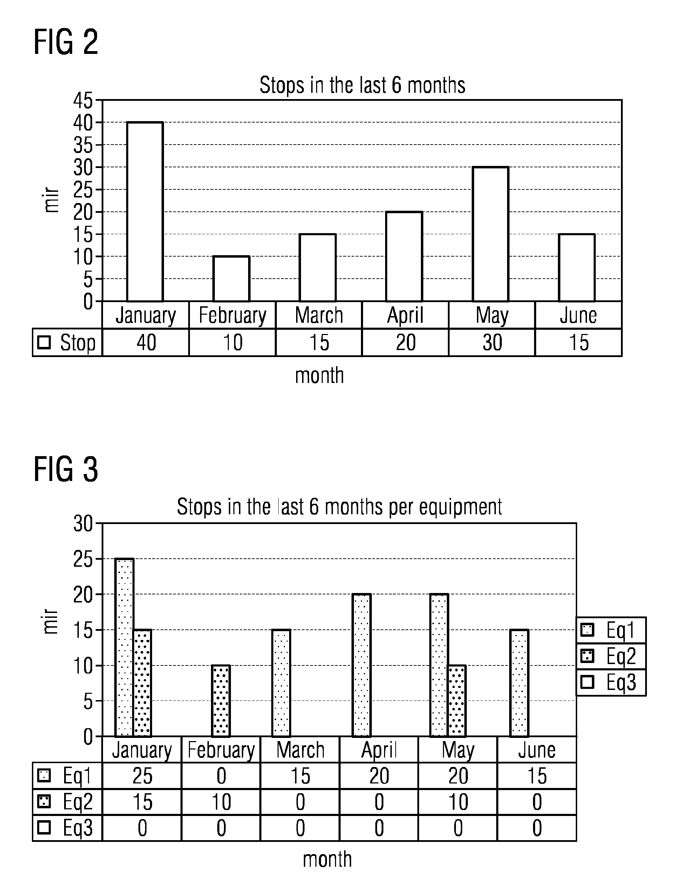

The OEE DataBrowser 41, 42, 43 on a client 4 shows the list of calculations preconfigured and the list of pieces of equipments. The user can select the line and the time range of the analysis. Then, due to the fact that it was defined a report for the state duration calculus showing how long an equipment was in a state, he can select it and filter on the state name «stop». A bar chart depicts the result of the filters in the last 6 months (Figure 2) but there is no difference between one equipment of the line and the others. In order to see a difference, the user must group the result by equipment and the result is depicted in Figure 3. State duration means how long equipment is/was in running status or stop status.

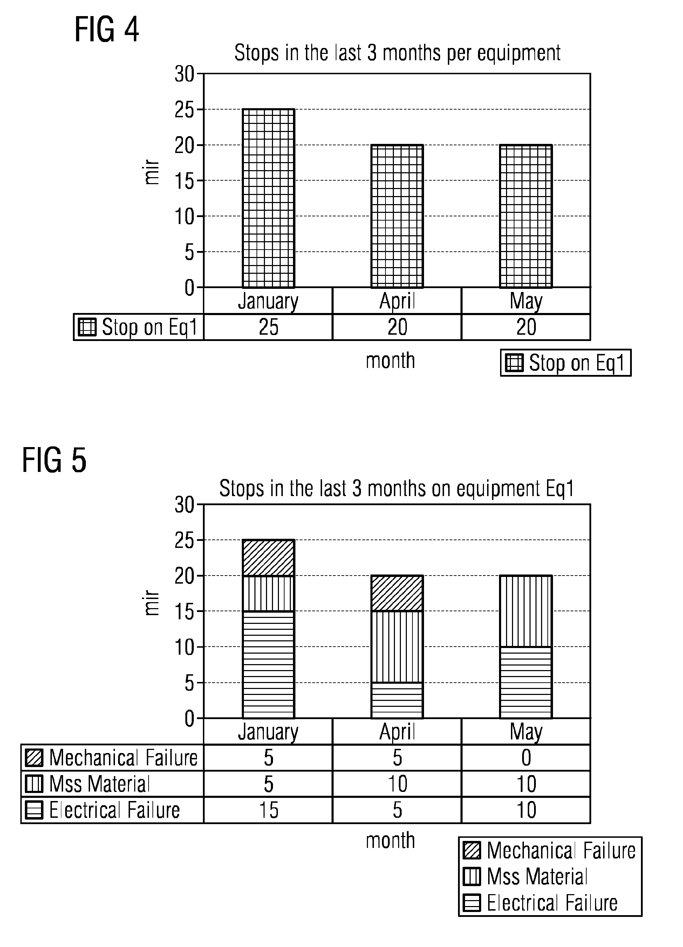

Let's assume a user wants only the result of the equipment where the duration of stop is longer than 5 minutes, a conditional statement must be applied to the result: In this case the OEE DataBrowser shows a wizard helping the user in the filtering of the result. The result of the filtering is depicted in Figure 4.

Due to the fact that users on border line must justify the stops of equipment settings. For showing the causes of stop, the user can enter the detail requirement of the cause to the chart. Figure 5 shows a detailed view of the main causes of stops.

### List of reference signs, glossary

- 1: Database server
- 11: OEE Database
- 12: Data Mining Support Database
- 2: OEE Server
- 21: Acquisition of data
- 22: Scheduling for reports
- 23: Runtime query execution
- 3: Web Server
- 31: Data Mining Service
- 32: Web application running in IIS
- 4: Client, clients
- 41, 42, 43: Browser, OEE Databrowser
- 5: Production Plant with MES
- DTM: DownTime Monitoring
- IIS: Internet Information Service
- KPI: key performance indicator
- MES: manufacturing execution system
- OEE: Overall Equipment Effectiveness
- SIMATIC IT: manufacturing execution system MES, a sophisticated, highly scalable MES that conforms to the ISA S95 standard

### List of cited documents

[1] EP 2 339 418 A1
   «Method and device for enhancing production facility
   performances»
   Siemens Aktiengesellschaft, 80333 - München
[2] ANSI/ISA-95.00.01-2000 Enterprise-Control System
   Integration
   Part 1: Models and Terminology
[3] IEC 62264-1 Enterprise-control system integration -
   Part 1: Models and terminology
[4] IEC 62264-2 Enterprise-control system integration -
   Part 2: Object model attributes

## Claims

1. Method for an Overall Equipment Effectiveness analysis - in the following denoted by OEE analysis - for a manufacturing execution system wherein the method is running on a distributed architecture, the architecture comprising
- a web server (3) on which a data mining service (31) and a web application (32) are running;
- browsers (41, 42, 43) running on clients (4), the clients (4) being connected with the web server (3);
- an OEE Server (2) connected with the web server (3) **characterized by**
the OEE Server (2) comprising the following services
- acquisition (21) of data from field (5);
- scheduling of calculations (22) for reports to be displayed on at least one of the browsers (41, 42, 43);
- execution (23) of runtime queries entered in at least
one of the browsers (41, 42, 43);
and by
- a database server (1) hosting an OEE database (11) and a data mining support database (12) wherein the data mining support database (12) contains data for the OEE analysis and wherein the data mining support database (12) is used only by browsers (41, 42, 43) running on a client (4).

2. Method according to claim 1,
**characterized further by**
the service scheduling of calculations (22) for reports is running and updated once for all reports and the reports are being stored in the OEE database (11).

3. Method according to claim 2,
**characterized by**
an update cycle of 1 hour.

4. Method according to one of the claims 1 to 3, **characterized by**
the data mining service (31) comprising the tasks:
- getting data from scheduled calculations;
- getting data from runtime queries;
- proposing a set of pre-built queries based on the configuration of the scheduled calculations (22) and on a user selection coming from a client (4);
- proposing new queries based on results of scheduled calculations (22), runtime queries and user selections.

5. Method according to claim 4,
**characterized by**
executing data mining algorithms in order to find the results as soon as possible.

6. Method according to claim 5,
wherein
the Data Mining Algorithms are a set of rules based on a mathematical model of OEE for highlighting a decision tree guiding a user during the analysis.

7. Method according to one of the claims 1 to 6,
wherein
via a user interaction results to be displayed on a browser (41, 42, 43) of a client (4) are shown filtered or more detailed.

8. Web application (32) running on a web server (3) wherein the Web application (32) is adapted for carrying out all services of the method according to one of claims 1 to 7.
